# FASCICULE DE BREVET EUROPEEN

(11) **EP 2 616 312 B1**
(45) Date de publication et mention de la délivrance du brevet: **29.05.2019**
(21) Numéro de dépôt: 11752283.9
(22) Date de dépôt: 22.07.2011
(51) Int. Cl.: B62D 1/10, F16D 1/108

(54) **DISPOSITIF DE COUPLAGE EN ROTATION DE DEUX ORGANES, PAR DÉFORMATION DE MOYENS DE COUPLAGE**
VORRICHTUNG ZUR DREHKOPPLUNG VON ZWEI ELEMENTEN ANHAND DER DEFORMATION VON KOPPLUNGSVORRICHTUNGEN
DEVICE FOR THE ROTATIONAL COUPLING OF TWO MEMBERS THROUGH DEFORMATION OF COUPLING MEANS

(30) Priorité: 17.09.2010 FR 1057451
(43) Date de publication de la demande: 24.07.2013
(73) Titulaire: PSA Automobiles SA, 78300 Poissy (FR)
(72) Inventeur: LECONTE, François, F-78320 Le Mesnil Saint Denis (FR); CAVAROC, Sylvain, F-28130 Houx (FR)
(86) Numéro de dépôt international: PCT/FR2011/051782
(87) Numéro de publication internationale: WO 2012/035225

(56) Documents cités:
- FR-A1- 2 882 025
- US-A1- 2005 097 982
- US-B1- 6 318 756

## Description

L'invention concerne les dispositifs qui sont chargés d'assurer le couplage en rotation de premier et second organes.

Comme le sait l'homme de l'art, certains dispositifs de couplage en rotation comprennent un élément (rotatif) qui est destiné à être monté à rotation par rapport à un second organe, et des moyens de verrouillage qui sont couplés en permanence à l'élément rotatif et agencés de manière à prendre une première position (dite « haute ») dans laquelle ils sont couplés au second organe ou une seconde position (dite « basse ») dans laquelle ils sont découplés du second organe. La première position est utilisée pendant le transport et le stockage du second organe, lorsqu'il est équipé du dispositif (de couplage en rotation). Elle est destinée à interdire la rotation de l'élément rotatif afin qu'il soit parfaitement positionné au moment où on veut coupler en rotation le premier organe au second organe. La seconde position est utilisée lorsque le premier organe a été couplé en rotation au second organe. Cette seconde position résulte de la translation subie par les moyens de verrouillage lorsque le premier organe appui sur ces derniers pendant l'opération de couplage.

A titre d'exemple non limitatif, le premier organe peut être un volant de véhicule (éventuellement de type automobile), et le second organe peut être un ensemble de commande qui est destiné à être solidarisé fixement à la (partie fixe) de la colonne de direction de ce même véhicule. Il est rappelé que l'ensemble de commande est un organe sur lequel sont montés des éléments de commande de fonction(s), comme par exemple des commodos. Dans ce type d'application, l'élément rotatif du dispositif est généralement appelé "rotor" et les moyens de verrouillage du dispositif sont généralement appelés "clutch".

Dans le cas d'un volant, l'élément rotatif permet le passage de câbles d'alimentation et de commande (par exemple destinés aux fonctions d'avertisseur sonore et de sac gonflable de protection (ou "airbag")) et est agencé de manière à pouvoir effectuer une première rotation maximale prédéfinie dans un premier sens (typiquement 900°, soit 2,5 tours) et une seconde rotation prédéfinie dans un second sens (typiquement 900°, soit 2,5 tours). Il est donc particulièrement important que l'élément rotatif demeure parfaitement positionné jusqu'au moment où on veut coupler en rotation le premier organe au second organe, afin qu'il n'existe pas un déséquilibre important entre les première et seconde rotations qui pourrait entraîner ultérieurement un arrachement de câble, et donc l'impossibilité d'utiliser les fonctions associées.

Afin de maintenir les moyens de verrouillage dans leur première position, tant que les premier et second organes n'ont pas été couplés en rotation, on utilise actuellement soit une portion de bande adhésive, soit des moyens de blocage (comme par exemple une "clé" que l'on vient clipper dans un orifice dédié des moyens de verrouillage, situé derrière un logement traversant de l'élément rotatif). Hélas, il peut arriver que la portion de bande adhésive se décolle lorsque certaines conditions climatiques sont réunies et/ou consécutivement à une manipulation du second organe. De même, il peut arriver que la patte de clippage de la clé se déclippe du second organe, parce qu'elle a été mal clippée ou suite à un choc (par exemple lors d'une manipulation du second organe), ou se casse lors d'un choc (par exemple lors d'une manipulation du second organe). Par conséquent, lorsque l'une des situations précitées survient, et que les moyens de verrouillage subissent une contrainte involontaire qui les fait passer de leur première position à leur seconde position, l'élément rotatif peut effectuer une rotation non contrôlée potentiellement dangereuse.

L'invention a donc pour but d'améliorer la situation.

Elle propose notamment à cet effet un dispositif, dédié au couplage en rotation de premier et second organes, et comprenant un élément (rotatif), propre à être monté à rotation par rapport au second organe, et des moyens de verrouillage couplés en permanence à l'élément rotatif et propres à prendre une première position dans laquelle ils sont couplés au second organe et une seconde position dans laquelle ils sont découplés du second organe.

Ce type de dispositif est notamment connu du document US6318756.

Le dispositif selon l'invention se caractérise par le fait qu'il comprend en outre des moyens de couplage de type déformable, destinés à être solidarisés à l'élément rotatif et agencés pour prendre une première forme propre à coupler l'élément rotatif au second organe lorsque les moyens de verrouillage sont dans leur première position et en l'absence de contrainte, et une seconde forme propre à découpler l'élément rotatif du second organe lorsque les moyens de verrouillage sont dans leur seconde position et subissent une contrainte générée par le premier organe lorsqu'il est solidarisé à rotation au second organe.

Le dispositif de contrôle selon l'invention peut comporter d'autres caractéristiques qui peuvent être prises séparément ou en combinaison, et notamment :
- ses moyens de couplage peuvent être agencés de manière à assurer un couplage direct de l'élément rotatif aux moyens de verrouillage, propre à maintenir ces derniers dans leur première position;
   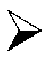 ses moyens de couplage peuvent comprendre une lame déformable comprenant une première extrémité solidarisée à l'élément rotatif et une seconde extrémité libre propre à être couplée aux moyens de verrouillage lorsque ces derniers sont dans leur première position;
   - la seconde extrémité libre de la lame peut être propre à être couplée aux moyens de verrouillage par introduction dans un premier logement qui est défini sur une face externe des moyens de verrouillage;
- dans une variante, ses moyens de couplage peuvent être agencés de manière à assurer un couplage direct de l'élément rotatif au second organe;
   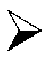 ses moyens de couplage peuvent comprendre un composant télescopique propre à être logé au moins partiellement dans un premier logement de l'élément rotatif et comportant une première extrémité propre à être couplée au second organe lorsque les moyens de couplage ont leur première forme;
   - la première extrémité du composant télescopique peut être propre à être introduite dans un second logement qui est défini sur une face externe du second organe, lorsque ses moyens de couplage ont leur première forme;
   - il peut comprendre des moyens d'appui solidarisés au premier organe et propres à exercer une pression sur une seconde extrémité du composant télescopique, opposée à la première, lors du couplage du premier organe au second organe, de manière à le contraindre à prendre la seconde forme dans laquelle il est découplé du second organe;
      ∘ les moyens d'appui peuvent être agencés sous la forme d'une protubérance solidarisée à une face arrière du premier organe;
   - le composant télescopique peut comprendre au moins une première partie comportant la seconde extrémité, une deuxième partie couplée en translation à la première partie sous une force de rappel élastique, et une troisième partie couplée en translation à la deuxième partie sous une force de rappel élastique et comportant la première extrémité;
      ∘ le composant télescopique peut comprendre en outre un cordon solidarisé aux première et troisième parties de manière à permettre la rétractation au moins partielle de la troisième partie dans la deuxième partie lorsque les moyens d'appui exercent une pression sur la seconde extrémité du composant télescopique qui induit également la rétractation au moins partielle de la deuxième partie dans la première partie.

D'autres caractéristiques et avantages de l'invention apparaîtront à l'examen de la description détaillée ci-après, et des dessins annexés, sur lesquels :
- la figure 1 illustre schématiquement, dans une vue en coupe, des premier et second organes équipés d'un premier exemple de réalisation d'un dispositif de couplage en rotation selon l'invention, avant leur couplage en rotation,
- la figure 2 illustre schématiquement, dans une vue en coupe, les premier et second organes de la figure 1, une fois couplés en rotation,
- la figure 3 illustre schématiquement, dans une vue en coupe, des premier et second organes équipés d'un second exemple de réalisation d'un dispositif de couplage en rotation selon l'invention, avant leur couplage en rotation,
- la figure 4 illustre schématiquement, dans une vue en coupe, les premier et second organes de la figure 3, une fois couplés en rotation,
- la figure 5 illustre schématiquement, dans une vue en coupe, un exemple de réalisation d'un composant télescopique du dispositif de couplage en rotation illustré sur la figure 3, et donc présentant sa première forme, et
- la figure 6 illustre schématiquement, dans une vue en coupe, un exemple de réalisation d'un composant télescopique du dispositif de couplage en rotation illustré sur la figure 5, et donc présentant sa seconde forme.

Les dessins annexés pourront non seulement servir à compléter l'invention, mais aussi contribuer à sa définition, le cas échéant.

L'invention a pour but d'offrir un dispositif (D) destiné à assurer le couplage en rotation de premier (V) et second (EC) organes.

Dans ce qui suit, on considère, à titre d'exemple non limitatif, que le premier organe (V) est un volant de véhicule et que le second organe (EC) est un ensemble de commande qui est destiné à être solidarisé à la partie fixe (CD) d'une colonne de direction de ce même véhicule. Mais, l'invention n'est pas limitée à ces types de premier (V) et second (EC) organes. Elle concerne en effet tous types de premier et second organes destinés à être couplés en rotation l'un à l'autre.

Par ailleurs, on considère dans ce qui suit, à titre d'exemple non limitatif, que le véhicule est de type automobile, comme par exemple une voiture. Mais, l'invention n'est pas limitée à cette application. Elle concerne en effet tout système pouvant comporter au moins un couple de premier et second organes.

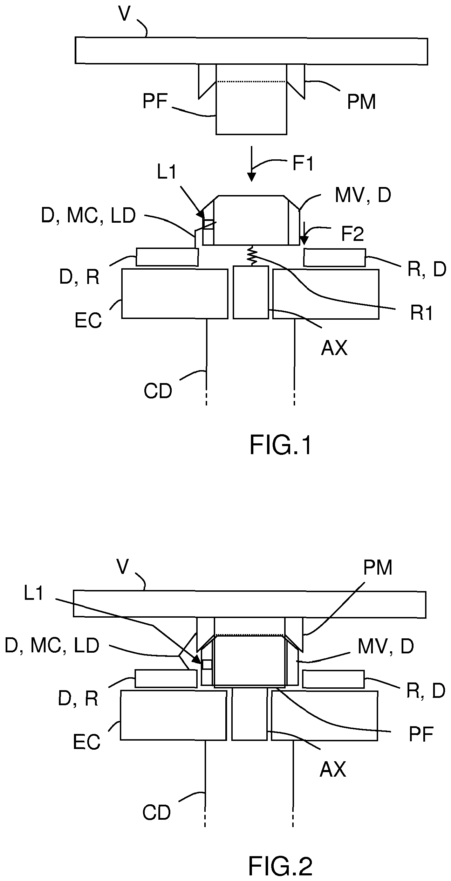

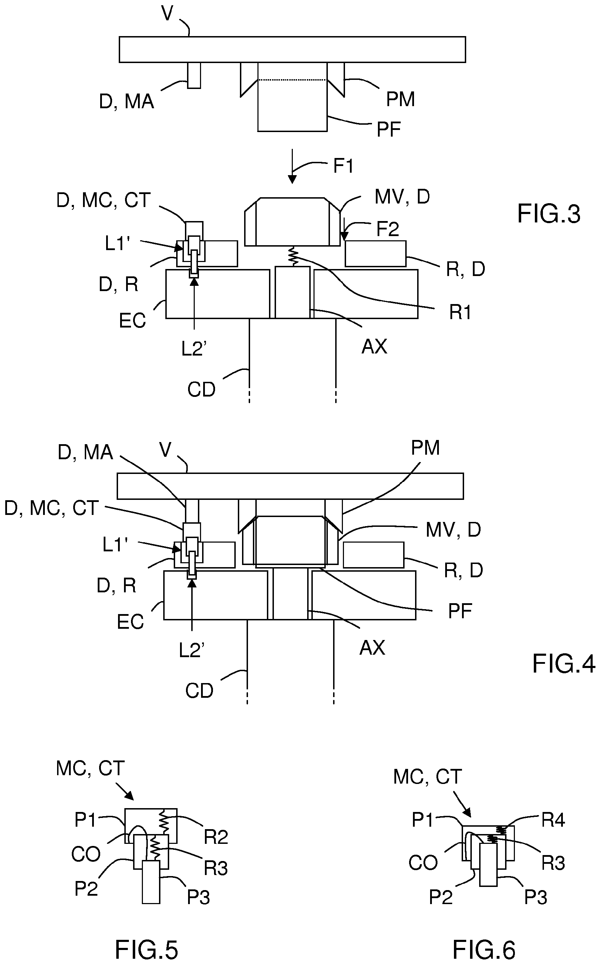

On a schématiquement représenté sur les figures 1 et 2 un premier exemple de réalisation d'un premier organe V (ici un volant) et un premier exemple de réalisation d'un second organe EC (ici un ensemble de commande), respectivement avant et après leur couplage en rotation. De même, on a schématiquement représenté sur les figures 3 et 4 un second exemple de réalisation d'un premier organe V (ici également un volant) et un second exemple de réalisation d'un second organe EC (ici également un ensemble de commande), respectivement avant et après leur couplage en rotation.

Il est rappelé que l'on entend ici par "ensemble de commande" un organe sur lequel sont montés des éléments de commande de fonction(s), comme par exemple des commodos.

Comme illustré, cet ensemble de commande EC est destiné à être solidarisé fixement à la partie fixe CD d'une colonne de direction, à l'intérieur de laquelle peut être entraîné en rotation un axe de direction AX, une fois qu'il a été équipé d'une partie au moins d'un dispositif de couplage en rotation D selon l'invention.

Comme illustré sur les figures 1 à 4, un dispositif (de couplage en rotation) D, selon l'invention, comprend au moins un élément rotatif R, des moyens de verrouillage MV et des moyens de couplage MC.

L'élément rotatif R est généralement appelé rotor dans le cas d'un couplage à un volant V. Il est couplé en permanence en rotation aux moyens de verrouillage MV (par des moyens de couplage bien connus de l'homme de l'art et non représentés sur les figures pour ne pas les surcharger) et destiné à être monté à rotation par rapport au second organe EC (ici un ensemble de commande).

Dans le cas d'un volant V, l'élément rotatif R est une pièce par laquelle passe des câbles d'alimentation et de commande (par exemple destinés aux fonctions d'avertisseur sonore et de sac gonflable de protection (ou "airbag")), et donc qui est destinée au final à permettre l'entraînement en rotation de ces câbles par rapport à une partie fixe CD de la colonne de direction.

Les moyens de verrouillage MV sont généralement appelés "clutch" dans le cas d'une association à un volant V. Ils peuvent prendre une première position (dite haute) dans laquelle ils sont couplés au second organe EC, ou une seconde position (dite basse) dans laquelle ils sont découplés du second organe EC.

La première position est utilisée pendant le transport et le stockage de l'ensemble de commande EC (ici), après que ce dernier ait été équipé d'une partie au moins du dispositif D. Lorsque les moyens de verrouillage MV sont dans leur première position, l'élément rotatif R ne peut pas être entraîné en rotation afin d'être parfaitement positionné au moment où on veut coupler en rotation le volant V à l'ensemble de commande EC. Cela résulte du fait que dans cette première position les moyens de verrouillage MV ne peuvent pas être entraînés en rotation par rapport à l'ensemble de commande EC et que dans le même temps ils sont couplés en permanence en rotation à l'élément rotatif R.

La seconde position est utilisée lorsque le volant V a été couplé en rotation à l'ensemble de commande EC, via ses moyens de verrouillage MV (alors libres d'être entraînés en rotation (avec l'élément rotatif R) par rapport à l'ensemble de commande EC). Comme on le verra plus loin, elle résulte de la translation (suivant la flèche F2) subie par les moyens de verrouillage MV lorsque le volant V appuie sur ces derniers (MV) pendant l'opération de couplage.

Comme illustré sur les figures, les moyens de verrouillage MV peuvent par exemple se présenter sous la forme d'une bague ayant une partie centrale creuse au travers de laquelle peut se translater (suivant la flèche F2) une partie centrale saillante PF du volant V dont l'extrémité libre est agencée de manière à être solidarisée fixement à l'axe de direction AX de la colonne de direction afin de permettre son entraînement en rotation par rapport à la partie fixe CD de cette colonne de direction. La partie centrale saillante PF (ou armature fixe) est par exemple de type cylindrique circulaire. Elle (PF) est par exemple, et comme illustrée, entourée au niveau de sa base (opposée à son extrémité libre) par une partie périphérique de couplage PM également saillante et destinée à être couplée en rotation aux moyens de verrouillage MV.

On notera que dans les exemples non limitatifs illustrés sur les figures 1 à 4, les moyens de verrouillage MV présentent une forme générale sensiblement cylindrique et peuvent se translater au travers d'une ouverture définie sensiblement au centre de l'élément rotatif R. Mais d'autres modes de réalisation peuvent être envisagés, notamment dissymétriques.

Comme illustré non limitativement sur les figures 1 à 4, les moyens de verrouillage MV peuvent être avantageusement montés en translation sous une force de rappel par rapport à l'axe de direction AX. Cette force de rappel est ici définie par un ressort R1. Par ailleurs, cette force de rappel tend à repousser automatiquement les moyens de verrouillage MV dans leur première position, afin d'augmenter la probabilité que l'élément rotatif R soit interdit de rotation tant que le volant V n'a pas été couplé (en rotation) à l'axe de direction AX via son armature fixe PF.

Les moyens de couplage MC sont de type déformable. Ils sont destinés à être solidarisés à l'élément rotatif R et agencés pour prendre des première et seconde formes.

La première forme est illustrée sur les figures 1, 3 et 5. Elle est adaptée au couplage de l'élément rotatif R à l'ensemble de commande EC lorsque les moyens de verrouillage MV sont dans leur première position (associée à l'interdiction de rotation de l'élément rotatif R) et en l'absence de contrainte.

La seconde forme est illustrée sur les figures 2, 4 et 6. Elle est adaptée au découplage de l'élément rotatif R de l'ensemble de commande EC lorsque les moyens de verrouillage MV sont dans leur seconde position (qui autorise leur rotation et donc celle de l'élément rotatif R), et lorsqu'ils subissent une contrainte générée par le volant V lorsque ce dernier est solidarisé à rotation à l'ensemble de commande EC.

Au moins deux familles de moyens de couplage MC peuvent être envisagées.

Une première famille concerne les moyens de couplage MC qui sont agencés de manière à assurer un couplage direct de l'élément rotatif R aux moyens de verrouillage MV, propre à maintenir ces derniers (MV) dans leur première position. Le premier exemple de dispositif D illustré sur les figures 1 et 2 comprend des moyens de couplage MC appartenant à cette première famille.

Dans ce premier exemple (non limitatif), les moyens de couplage MC comprennent principalement une lame déformable LD. Cette dernière comprend une première extrémité qui est solidarisée à l'élément rotatif R et une seconde extrémité libre qui est agencée de manière à pouvoir être couplée aux moyens de verrouillage MV lorsque ces derniers (MV) sont placés dans leur première position (figure 1).

Par exemple, et comme illustré non limitativement sur la figure 1, la seconde extrémité libre de la lame LD peut être agencée de manière à pouvoir être couplée aux moyens de verrouillage MV par introduction dans un premier logement L1 qui est défini sur une face latérale externe des moyens de verrouillage MV (orientée vers la lame LD). Ce premier logement L1 débouche ici dans la partie centrale évidée des moyens de verrouillage MV afin de permettre à la seconde extrémité libre de la lame LD de déboucher légèrement dans cette partie centrale évidée.

On notera que ce premier logement L1 peut être éventuellement considéré comme faisant partie du dispositif D, et notamment de ses moyens de couplage MC. On notera également que ce premier logement L1 peut présenter n'importe quelle forme dès lors qu'il permet de loger (et laisser passer) une seconde extrémité libre d'une lame LD.

On comprendra que lorsque les moyens de verrouillage MV sont placés dans leur première position (figure 1) et que l'élément rotatif R est correctement placé dans sa position "centrale" prédéfinie, la seconde extrémité libre de la lame LD se retrouve automatiquement logée dans le premier logement L1, et donc la lame LD empêche les moyens de verrouillage MV de quitter leur première position.

Lorsque l'ensemble de commande EC est placé dans l'état illustré sur la figure 1 et, qu'après l'avoir solidarisé fixement à la partie fixe CD de la colonne de direction, on veut le coupler en rotation au volant V également illustré sur la figure 1, on commence par rapprocher le volant V de l'ensemble de commande EC afin de translater l'armature centrale PF que comprend le volant V dans la partie centrale évidée des moyens de verrouillage MV jusqu'à ce qu'elle vienne au contact de la seconde extrémité libre de la lame LD. Puis, on continue de rapprocher le volant V de l'ensemble de commande EC, ce qui déforme la lame LD et donc contraint sa seconde extrémité à quitter le premier logement L1. A un moment donné, la partie périphérique de couplage PM du volant V, qui est ici située à la périphérie de la base de l'armature fixe PF, entre en contact avec les moyens de verrouillage MV. Ces derniers (MV) peuvent alors être translatés progressivement vers leur seconde position (illustrée sur la figure 2) sous l'action de la force qui est exercée sur le volant V dans la fin de la phase de rapprochement.

Lorsque l'armature fixe PF entre en contact avec l'axe de direction AX, elle peut être solidarisée fixement à ce dernier (AX), par exemple par vissage ou clippage. Le volant V est alors désormais en mesure d'entraîner l'axe de direction AX, comme illustré sur la figure 2.

On notera que les moyens de verrouillage MV peuvent, comme illustré, présenter une forme particulière (de préférence dissymétrique) de manière à permettre le positionnement du volant V dans une unique position choisie par rapport à l'ensemble de commande EC et donc par rapport à la colonne de direction CD. Dans ce cas, et comme illustré, la partie périphérique de couplage PM du volant V doit également présenter une forme particulière (d'indexage) sensiblement homologue à celle des moyens de verrouillage MV afin de permettre le positionnement du volant V dans sa position choisie précitée.

Si l'on souhaite ultérieurement découpler le volant V de l'ensemble de commande EC, on doit commencer par désolidariser son armature fixe PF de l'axe de direction AX, puis on doit éloigner le volant V de l'ensemble de commande EC. Les moyens de verrouillage MV se translatent alors progressivement vers leur première position sous l'action de la force de rappel générée par le premier ressort R1. Puis, lorsque l'armature fixe PF est passée au-delà du premier logement L1, la seconde extrémité libre de la lame LD peut être de nouveau logée dans le premier logement L1, permettant ainsi à la lame LD de reprendre sa forme initiale (avant déformation). Les moyens de verrouillage MV sont alors de nouveau immobilisés dans leur première position à cause de la lame LD.

Une seconde famille concerne les moyens de couplage MC qui sont agencés de manière à assurer un couplage direct de l'élément rotatif R à l'ensemble de commande EC. Le second exemple de dispositif D illustré sur les figures 3 à 6 comprend des moyens de couplage MC appartenant à cette seconde famille.

Dans ce second exemple (non limitatif), les moyens de couplage MC comprennent principalement un composant télescopique CT qui est propre à être logé au moins partiellement dans un premier logement L1' de l'élément rotatif R. On notera que ce premier logement L1' peut être éventuellement considéré comme faisant partie du dispositif D, et notamment de ses moyens de couplage MC.

Ce composant télescopique CT comporte une première extrémité qui est propre à être couplée à l'ensemble de commande EC lorsqu'il présente sa première forme (c'est-à-dire celle offrant une extension maximale) en l'absence de contrainte.

Par exemple, et comme illustré non limitativement sur la figure 3, la première extrémité du composant télescopique CT peut être agencée de manière à pouvoir être introduite dans un second logement L2' qui est défini sur une face externe (avant) de l'ensemble de commande EC, lorsque le composant télescopique CT présente sa première forme.

La déformation du composant télescopique CT de sa première forme (étendue - voir figures 3 et 5) vers sa seconde forme (rétractée - voir figures 4 et 6) pourrait être induite par la pression exercée par l'armature fixe PF du volant V lorsque celui-ci est rapproché de l'ensemble de commande EC. Mais, dans une variante illustrée sur les figures 3 et 4, cette déformation peut être également induite par des moyens d'appui MA qui sont solidarisés à une face arrière du volant V, au voisinage de son armature fixe PF.

Ces moyens d'appui MA sont plus précisément agencés de manière à exercer une pression sur la seconde extrémité du composant télescopique CT, qui est opposée à la première, lors du couplage du volant V à l'axe de direction AX.

On comprendra que cette pression contraint le composant télescopique CT à prendre sa seconde forme (rétractée - voir figures 4 et 6) dans laquelle il est découplé de l'ensemble de commande EC.

Comme illustré non limitativement, les moyens d'appui MA peuvent, par exemple, être agencés sous la forme d'une protubérance qui est solidarisée à la face arrière du volant V. Cette protubérance peut être une pièce rapportée ou bien une partie intégrante du volant V. Elle peut par exemple présenter une forme de doigt ou tige linéaire.

Par ailleurs, et comme illustré non limitativement sur les figures 3 à 6, le composant télescopique CT peut comprendre au moins trois parties P1 à P3, imbriquées à translation les unes dans les autres.

Une première partie P1 peut comporter la seconde extrémité sur laquelle est exercée la pression (suivant la flèche F1). Lorsque le composant télescopique CT présente sa première forme, la première partie P1 sort préférentiellement du premier logement L1', afin de pouvoir être facilement contactée par les moyens d'appui MA.

Une deuxième partie P2 est couplée en translation à la première partie P1 sous une force de rappel élastique, par exemple générée par au moins un deuxième ressort R2. Ici, elle est au moins partiellement logée (et donc imbriquée) dans une partie centrale évidée de la première partie P1. Cette force de rappel tend à écarter automatiquement la deuxième partie P2 de la première partie P1.

Une troisième partie P3 peut comporter la première extrémité qui est logée dans le second logement L2' lorsque le composant télescopique CT présente sa première forme. Elle est couplée en translation à la deuxième partie P2 sous une force de rappel élastique, par exemple générée par au moins un troisième ressort R3. Ici, elle est au moins partiellement logée (et donc imbriquée) dans une partie centrale évidée de la deuxième partie P2. Cette force de rappel tend à écarter automatiquement la troisième partie P3 de la deuxième partie P2.

Afin que la première extrémité de la troisième partie P3 puisse être automatiquement dégagée du second logement L2' lors de l'interaction du composant télescopique CT avec les moyens d'appui MA, le composant télescopique CT peut, par exemple et comme illustré sur les figures 5 et 6, comprendre un cordon CO solidarisé à ses première P1 et troisième P3 parties. On comprendra en effet que ce cordon CO, éventuellement élastique, permet de rétracter au moins partiellement la troisième partie P3 dans la deuxième partie P2 lorsque les moyens d'appui MA exercent une pression sur la seconde extrémité du composant télescopique CT. En effet, lorsque cette pression est exercée, la première partie P1 pénètre (ici) dans le premier logement L1', ce qui contraint la deuxième partie P2 à se translater au moins partiellement dans la première partie P1, et donc induit une traction sur le cordon CO qui contraint la troisième partie P3 à se translater au moins partiellement dans la deuxième partie P2 en dégageant la première extrémité du second logement L2'.

Lorsque l'ensemble de commande EC est placé dans l'état illustré sur la figure 3 et, qu'après l'avoir solidarisé fixement à la partie fixe CD de la colonne de direction, on veut le coupler en rotation au volant V également illustré sur la figure 3, on commence par rapprocher le volant V de l'ensemble de commande EC jusqu'à ce que les moyens d'appui MA viennent au contact de la seconde extrémité de la première partie P1 du composant télescopique CT. Puis, on continue de rapprocher le volant V de l'ensemble de commande EC, ce qui déforme le composant télescopique CT par rétraction et donc contraint sa première extrémité à quitter le second logement L2'. A un moment donné, la partie périphérique de couplage PM du volant V entre en contact avec les moyens de verrouillage MV. Ces derniers (MV) peuvent alors être translatés progressivement vers leur seconde position (illustrée sur la figure 4) sous l'action de la force qui est exercée sur le volant V dans la fin de la phase de rapprochement.

Lorsque l'armature fixe PF du volant V entre en contact avec l'axe de direction AX, elle peut être solidarisée fixement à ce dernier (AX), par exemple par vissage ou clippage. Le volant V est alors désormais en mesure d'entraîner l'axe de direction AX, comme illustré sur la figure 4.

Si l'on souhaite ultérieurement découpler le volant V de l'ensemble de commande EC, on doit commencer par désolidariser son armature fixe PF de l'axe de direction AX, puis on doit éloigner le volant V de l'ensemble de commande EC. Les moyens de verrouillage MV se translatent alors progressivement vers leur première position sous l'action de la force de rappel générée par le premier ressort R1. Puis, lorsque les moyens d'appui MA s'écartent de l'élément rotatif R, le composant télescopique CT peut reprendre progressivement et automatiquement sa première forme (étendue) sous l'action des deuxième R2 et troisième R3 ressorts. Dans le même temps, les moyens de verrouillage MV se translatent progressivement et automatiquement vers leur première position sous l'action de la force de rappel générée par le premier ressort R1. La première extrémité du composant télescopique CT est alors de nouveau logée dans le second logement L2' et donc l'élément rotatif R se retrouve de nouveau couplé directement à l'ensemble de commande EC, et donc interdit de rotation. On comprendra alors que même si l'on provoque une translation involontaire des moyens de verrouillage MV vers leur seconde position, l'élément rotatif R va demeurer interdit de rotation par rapport à l'ensemble de commande EC du fait de son couplage à ce dernier (EC) via le composant télescopique CT.

L'invention ne se limite pas aux modes de réalisation de dispositif de couplage en rotation, de premier organe et de second organe décrits ci-avant, seulement à titre d'exemple, mais elle englobe toutes les variantes que pourra envisager l'homme de l'art dans le cadre des revendications ci-après.

## Revendications

1. Dispositif (D) de couplage en rotation de premier (V) et second (EC) organes, ledit dispositif (D) comprenant un élément (R), propre à être monté à rotation par rapport audit second organe (EC), et des moyens de verrouillage (MV) couplés en permanence audit élément (R) et propres à prendre une première position dans laquelle ils sont couplés audit second organe (EC) et une seconde position dans laquelle ils sont découplés dudit second organe (EC), **caractérisé en ce qu'**il comprend en outre des moyens de couplage (MC) de type déformable, destinés à être solidarisés audit élément (R) et agencés pour prendre une première forme propre à coupler ledit élément (R) audit second organe (EC) lorsque lesdits moyens de verrouillage (MV) sont dans ladite première position et en l'absence de contrainte, et une seconde forme propre à découpler ledit élément (R) dudit second organe (EC) lorsque lesdits moyens de verrouillage (MV) sont dans ladite seconde position et subissent une contrainte générée par ledit premier organe (V) lorsqu'il est solidarisé à rotation audit second organe (EC).

2. Dispositif selon la revendication 1, **caractérisé en ce que** lesdits moyens de couplage (MC) sont agencés de manière à assurer un couplage direct dudit élément (R) auxdits moyens de verrouillage (MV), propre à maintenir ces derniers (MV) dans leur première position.

3. Dispositif selon la revendication 2, **caractérisé en ce que** lesdits moyens de couplage (MC) comprennent une lame déformable (LD) comprenant une première extrémité solidarisée audit élément (R) et une seconde extrémité libre propre à être couplée auxdits moyens de verrouillage (MV) lorsque ces derniers (MV) sont dans leur première position.

4. Dispositif selon la revendication 3, **caractérisé en ce que** ladite seconde extrémité libre de la lame (LD) est propre à être couplée auxdits moyens de verrouillage (MV) par introduction dans un premier logement (L1) défini sur une face externe desdits moyens de verrouillage (MV).

5. Dispositif selon la revendication 1, **caractérisé en ce que** lesdits moyens de couplage (MC) sont agencés de manière à assurer un couplage direct dudit élément (R) audit second organe (EC).

6. Dispositif selon la revendication 5, **caractérisé en ce que** lesdits moyens de couplage (MC) comprennent un composant télescopique (CT) propre à être logé au moins partiellement dans un premier logement (L1') dudit élément (R) et comportant une première extrémité propre à être couplée audit second organe (EC) lorsque lesdits moyens de couplage (MC) ont leur première forme.

7. Dispositif selon la revendication 6, **caractérisé en ce que** ladite première extrémité du composant télescopique (CT) est propre à être introduite dans un second logement (L2') défini sur une face externe dudit second organe (EC), lorsque lesdits moyens de couplage (MC) ont leur première forme.

8. Dispositif selon l'une des revendications 6 et 7, **caractérisé en ce qu'**il comprend des moyens d'appui (MA) solidarisés audit premier organe (V) et propres à exercer une pression sur une seconde extrémité dudit composant télescopique (CT), opposée à la première, lors du couplage dudit premier organe (V) audit second organe (EC), de manière à le contraindre à prendre ladite seconde forme dans laquelle il est découplé dudit second organe (EC).

9. Dispositif selon la revendication 8, **caractérisé en ce que** lesdits moyens d'appui (MA) sont agencés sous la forme d'une protubérance solidarisée à une face arrière dudit premier organe (V).

10. Dispositif selon l'une des revendications 6 à 9, **caractérisé en ce que** ledit composant télescopique (CT) comprend au moins une première partie (P1) comportant ladite seconde extrémité, une deuxième partie (P2) couplée en translation à ladite première partie (P1) sous une force de rappel élastique, et une troisième partie (P3) couplée en translation à ladite deuxième partie (P2) sous une force de rappel élastique et comportant ladite première extrémité.

11. Dispositif selon la revendication 10 en combinaison avec l'une des revendications 8 et 9, **caractérisé en ce que** ledit composant télescopique (CT) comprend en outre un cordon (CO) solidarisé auxdites première (P1) et troisième (P3) parties de manière à permettre la rétractation au moins partielle de ladite troisième partie (P3) dans ladite deuxième partie (P2) lorsque lesdits moyens d'appui (MA) exercent une pression sur ladite seconde extrémité du composant télescopique (CT) qui induit également la rétractation au moins partielle de ladite deuxième partie (P2) dans ladite première partie (P1).

## Patentansprüche

1. Vorrichtung (D) zur Drehkopplung eines ersten (V) und eines zweiten (EC) Elements, wobei die Vorrichtung (D) ein Element (R) umfasst, das geeignet ist, um unter Drehen bezüglich des zweiten Elements (EC) montiert zu werden, und Verriegelungsmittel (MV), die ständig mit dem Element (R) gekoppelt und geeignet sind, um eine erste Position einzunehmen, in der sie mit dem zweiten Element (EC) gekoppelt sind, und eine zweite Position, in der sie von dem zweiten Element (EC) abgekoppelt sind, **dadurch gekennzeichnet, dass** sie außerdem Kopplungsmittel (MC) vom verformbaren Typ umfasst, die dazu bestimmt sind, fest mit dem Element (R) verbunden zu sein, und eingerichtet sind, um eine erste Form anzunehmen, die geeignet ist, um das Element (R) mit dem zweiten Element (EC), wenn die Verriegelungsmittel (MV) in der ersten Position sind und bei Fehlen von Belastung zu koppeln, und eine zweite Form, die geeignet ist, um das Element (R) von dem zweiten Organ (EC) abzukoppeln, wenn die Verriegelungsmittel (MV) in der zweiten Position sind und einer Belastung unterliegen, die von dem ersten Element (V) erzeugt wird, wenn es unter Drehen mit dem zweiten Element (EC) fest verbunden ist.

2. Vorrichtung nach Anspruch 1, **dadurch gekennzeichnet, dass** die Kopplungsmittel (MC) derart eingerichtet sind, dass sie ein direktes Koppeln des Elements (R) mit den Verriegelungsmitteln (MV), sicherstellen, das geeignet ist, diese Letzteren (MV) in ihrer ersten Position zu halten.

3. Vorrichtung nach Anspruch 2, **dadurch gekennzeichnet, dass** die Kopplungsmittel (MC) eine verformbare Klinge (LD) umfassen, die ein erstes Ende umfasst, das fest mit dem Element (R) verbunden ist, und ein zweites freies Ende, das geeignet ist, um mit den Verriegelungsmitteln (MV) gekoppelt zu sein, wenn diese Letzteren (MV) in ihrer ersten Position sind.

4. Vorrichtung nach Anspruch 3, **dadurch gekennzeichnet, dass** das zweite freie Ende der Klinge (LD) geeignet ist, um mit den Verriegelungsmitteln (MV) durch Einführen in eine erste Aufnahme (L1), die auf einer Außenfläche der Verriegelungsmittel (MV) definiert ist, gekoppelt zu werden.

5. Vorrichtung nach Anspruch 1, **dadurch gekennzeichnet, dass** die Kopplungsmittel (MC) derart eingerichtet sind, dass sie ein direktes Koppeln des Elements (R) an dem zweiten Element (EC) sicherstellen.

6. Vorrichtung nach Anspruch 5, **dadurch gekennzeichnet, dass** die Kopplungsmittel (MC) ein Teleskopbauteil (CT) umfassen, das geeignet ist, um mindestens teilweise in einer ersten Aufnahme (L1') des Elements (R) aufgenommen zu sein, und ein erstes Ende umfassen, das geeignet ist, um mit dem zweiten Element (EC) gekoppelt zu sein, wenn die Kopplungsmittel (MC) ihre erste Form aufweisen.

7. Vorrichtung nach Anspruch 6, **dadurch gekennzeichnet, dass** das erste Ende des Teleskopbauteils (CT) geeignet ist, um in eine zweite Aufnahme (L2'), die auf einer Außenfläche des zweiten Elements (EC) definiert ist, eingeführt zu werden, wenn die Kopplungsmittel (MC) ihre erste Form aufweisen.

8. Vorrichtung nach einem der Ansprüche 6 und 7, **dadurch gekennzeichnet, dass** sie Auflagemittel (MA) umfasst, die fest mit dem ersten Element (V) verbunden und geeignet sind, einen Druck auf ein zweites Ende des Teleskopbauteils (CT), das dem ersten entgegengesetzt ist, beim Koppeln des ersten Elements (V) an dem zweiten Element (EC) derart auszuüben, dass es gezwungen wird, die zweite Form anzunehmen, in der es von dem zweiten Element (EC) abgekoppelt ist.

9. Vorrichtung nach Anspruch 8, **dadurch gekennzeichnet, dass** die Auflagemittel (MA) in der Form einer Ausstülpung eingerichtet sind, die fest mit einer hinteren Fläche des ersten Elements (V) verbunden ist.

10. Vorrichtung nach einem der Ansprüche 6 bis 9, **dadurch gekennzeichnet, dass** das Teleskopbauteil (CT) mindestens einen ersten Teil (P1) umfasst, der das zweite Ende umfasst, einen zweiten Teil (P2), der in Verschiebung mit dem ersten Teil (P1) unter einer elastischen Rückstellkraft gekoppelt ist, und einen dritten Teil (P3), der in Verschiebung mit dem zweiten Teil (P2) unter einer elastischen Rückstellkraft gekoppelt ist und das erste Ende umfasst.

11. Vorrichtung nach Anspruch 10 kombiniert mit einem der Ansprüche 8 bis 9, **dadurch gekennzeichnet, dass** das Teleskopbauteil (CT) außerdem eine Schnur (CO) umfasst, die mit dem ersten (P1) und dem dritten (P3) Teil derart fest verbunden ist, dass das mindestens teilweise Zurückziehen des dritten Teils (P3) in den zweiten Teil (P2) erlaubt wird, wenn die Auflagemittel (MA) einen Druck auf das zweite Ende des Teleskopbauteils (CT) auswirken, der auch das mindestens teilweise Zurückziehen des zweiten Teils (P2) in den ersten Teil (P1) induziert.

## Claims

1. A device (D) for the rotational coupling of first (V) and second (EC) members, said device (D) including an element (R) suitable for being rotationally mounted with respect to said second member (EC), and locking means (MV) permanently coupled to said element (R) and suitable to adopt a first position in which they are coupled to said second member (EC) and a second position in which they are uncoupled from said second member (EC), **characterized in that** it further includes coupling means (MC) of deformable type, intended to be secured to said element (R) and arranged to adopt a first shape suitable for coupling said element (R) to said second member (EC) when said locking means (MV) are in said first position and in the absence of stress, and a second shape suitable for uncoupling said element (R) from said second member (EC) when said locking means (MV) are in said second position and are subject to a stress generated by said first member (V) when it is rotationally secured to said second member (EC).

2. The device according to Claim 1, **characterized in that** said coupling means (MC) are arranged so as to ensure a direct coupling of said element (R) to said locking means (MV), suitable to maintain these latter (MV) in their first position.

3. The device according to Claim 2, **characterized in that** said coupling means (MC) include a deformable blade (LD) including a first end secured to said element (R) and a second free end suitable to be coupled to said locking means (MV) when these latter (MV) are in their first position.

4. The device according to Claim 3, **characterized in that** said second free end of the blade (LD) is suitable to be coupled to said locking means (MV) by introduction in a first housing (L1) defined on an external face of said locking means (MV).

5. The device according to Claim 1, **characterized in that** said coupling means (MC) are arranged so as to ensure a direct coupling of said element (R) to said second member (EC).

6. The device according to Claim 5, **characterized in that** said coupling means (MC) include a telescopic component (CT) suitable to be housed at least partially in a first housing (L1') of said element (R) and comprising a first end suitable to be coupled to said second member (EC) when said coupling means (MC) have their first shape.

7. The device according to Claim 6, **characterized in that** said first end of the telescopic component (CT) is suitable to be introduced in a second housing (L2') defined on an external face of said second member (EC), when said coupling means (MC) have their first shape.

8. The device according to one of Claims 6 and 7, **characterized in that** it includes bearing means (MA) secured to said first member (V) and suitable to exert a pressure on a second end of said telescopic component (CT), opposite the first, during the coupling of said first member (V) to said second member (EC), so as to compel it to adopt said second shape in which it is uncoupled from said second member (EC) .

9. The device according to Claim 8, **characterized in that** said bearing means (MA) are arranged in the form of a protuberance secured to a rear face of said first member (V).

10. The device according to one of Claims 6 to 9, **characterized in that** said telescopic component (CT) includes at least a first part (P1) comprising said second end, a second part (P2) coupled in translation to said first part (P1) under an elastic restoring force, and a third part (P3) coupled in translation to said second part (P2) under an elastic restoring force and comprising said first end.

11. The device according to Claim 10 in combination with one of Claims 8 and 9, **characterized in that** said telescopic component (CT) further includes a cord (CO) secured to said first (P1) and third (P3) parts so as to permit the at least partial retraction of said third part (P3) in said second part (P2) when said bearing means (MA) exert a pressure on said second end of the telescopic component (CT) which also induces the at least partial retraction of said second part (P2) in said first part (P1).
